# EUROPÄISCHE PATENTSCHRIFT

(11) **EP 3 832 181 B1**
(45) Veröffentlichungstag und Bekanntmachung des Hinweises auf die Patenterteilung: **21.09.2022**
(21) Anmeldenummer: 20210228.1
(22) Anmeldetag: 27.11.2020
(51) Int. Cl.: F16K 27/02, F01L 3/10, F16K 31/06, F16K 1/12

(54) **MONTAGEVORRICHTUNG NEBST KLAMMEREINRICHTUNG**
MOUNTING DEVICE WITH CLAMPING DEVICE
DISPOSITIF DE MONTAGE POURVU D'AGENCEMENT DE SERRAGE

(30) Priorität: 03.12.2019 DE 102019008382
(43) Veröffentlichungstag der Anmeldung: 09.06.2021
(73) Patentinhaber: HYDAC Accessories GmbH, 66280 Sulzbach/Saar (DE)
(72) Erfinder: Brabänder, Wolfgang, 66424 Homburg (DE); Schmitt, Martin, 66917 Knopp-Labach (DE)
(74) Vertreter: Bartels und Partner, Patentanwälte

(56) Entgegenhaltungen:
- DE-A1- 3 439 378
- FR-A- 554 320
- Gust. Alberts Gmbh & Co. Kg: "GAH ALBERTS - HARDWARE for wood and metal construction", Herscheid (DE), 30. April 2015 (2015-04-30), XP055792866, Gefunden im Internet: URL:https://www.gah.de/fileadmin/medien/do wnloads/kataloge/EN/400606_EN_Eisenwaren_2 015.pdf [gefunden am 2021-04-06]

## Beschreibung

Die Erfindung betrifft eine Klammereinrichtung mit den Merkmalen im Oberbegriff von Anspruch 1.

Durch die DE 10 2017 008 943 A1 ist eine Ventilvorrichtung bekannt mit einem Ventilgehäuse, in dem längsverfahrbar ein hohles Ventilteil geführt ist, das von einer Betätigungseinrichtung entgegen der Wirkung einer als Druckfeder konzipierten Ventilfeder angesteuert in mindestens einer geöffneten Position den Fluidweg durch das Ventil hindurch zwischen einem Fluideingang und einem Fluidausgang entlang eines vorgebbaren Strömungsweges für ein Fluid freigibt und in einer geschlossenen Position diesen Fluidweg sperrt, bei der das Ventilteil in Anlage mit einem Ventil-Schließteil ist, von dem es in der jeweils geöffneten Position abhebt. Dahingehende Ventilvorrichtungen werden fachsprachlich auch als Koaxialventile bezeichnet und bei der bekannten Lösung ist zumindest eine Strömungsleiteinrichtung vorhanden, die eine zumindest teilweise Richtungsumkehr im Strömungsweg für das aus dem Ventilteil austretende Fluid bewirkt, sobald dieses eine geöffnete Position einnimmt.

Die bekannte Ventilvorrichtung besteht aus einer Vielzahl einzelner Ventilkomponenten, die in der Art eines Baukastens zu einem funktionsfähigen Ventil zusammengesetzt werden müssen, wobei für die Montage des Ventils erschwerend noch hinzukommt, dass unter der Wirkung der Ventil- oder Druckfeder die Ventilkomponenten die Neigung haben, sich wieder voneinander zu vereinzeln. Gelingt das Zusammensetzen der einzelnen Ventilkomponenten zu dem Gesamtventil werden diese über eine Schraubverbindung unter Einsatz von vier Einzelschrauben nebst zugehörigen Verbindungsmuttern unter Bildung eines funktionsfähigen Gesamtverbundes aneinandergehalten, wobei das Herstellen der dahingehenden Schraubverbindung entsprechend zeitaufwändig und mithin kostenintensiv ist. Des Weiteren ist die bekannte Ventilvorrichtung regelmäßig mittels einer Festlegekonsole an Drittbauteilen festzulegen, um dergestalt unter Herstellen von Fluidanschlussverbindungen unter Einbezug des Ventils zu einem betriebsfähigen Gesamtsystem im Rahmen einer hydraulischen Anlage zu kommen.

Der Katalog "HARDWARE for wood and metal construction" aus dem Jahr 2015 der Firma Gust. Alberts GmbH & Co. KG, Gewerbegebiet Grünenthal, 58849 Herscheid, Deutschland, beschreibt eine Klammereinrichtung, wobei unter Bildung einer Art Aufnahmekäfig ein Aufnahmeraum von einem Kopfstück und zwei Klammerteilen, die als federelastische Zungen an dem Kopfstück einstückig angelenkt sind, zumindest mitbegrenzt ist, wobei die Klammerteile und das Kopfstück Durchgriffstellen zum Anbringen zumindest von Teilen einer Schraubenverbindung aufweisen, und wobei das Kopfstück als ebene Platte im Wesentlichen rechteckförmig ausgebildet ist und eine kreisrunde Mittenausnehmung mittig im Kopfstück platziert ist, die von einem Rand des Kopfstücks umgeben ist.

Montagevorrichtungen gehen aus der FR 554 320 A und der DE 34 39 378 A1 hervor.

Ausgehend von diesem Stand der Technik liegt der Erfindung die Aufgabe zugrunde, die bekannte Lösung dahingehend weiter zu verbessern, dass sowohl die Montage mit den Ventilkomponenten selbst als auch im Bedarfsfall eine verbesserte Festlegung des Ventils an Drittbauteilen erleichtert ist.

Eine dahingehende Aufgabe löst eine Klammereinrichtung mit den Merkmalen des nebengeordneten Anspruches 1. Vorteilhafte Ausführungsformen der Klammereinrichtung gehen aus den Unteransprüchen hervor.

Gemäß dem Kennzeichen von Anspruch 1 ist vorgesehen, dass der Rand in seinen vier Eckbereichen vier weitere kreisrunde Durchgriffslöcher als Durchgriffsstellen des Kopfstücks aufweist; und dass die Durchgriffslöcher des Kopfstücks für den Durchgriff von Festlegeschrauben der Schraubenverbindung mit den zuordenbaren Durchgriffslöchern als Durchgriffsstellen der Klammerteile fluchtend miteinander angeordnet sind.

Die Montagevorrichtung ist dadurch gekennzeichnet, dass mittels einer von außen auf das jeweilige Ventil einwirkenden Klammereinrichtung die Ventilkomponenten in Form der Baugruppe zusammengehalten sind, die hierfür in einen Aufnahmeraum der Klammereinrichtung aufgenommen sind. Dergestalt lassen sich die Ventilkomponenten als Teile des Ventil-Baukastens quasi in den Aufnahmeraum der Klammereinrichtung einstapeln und werden dann im Rahmen der Montage von der Klammereinrichtung definiert in ihrer jeweiligen Position gehalten. Selbst wenn die Ventilkomponenten dann vergleichbar wie bei der bekannten Lösung unter der Vorspannung einer Ventilfeder das Bestreben haben, sich zu vereinzeln, erlaubt die Klammereinrichtung das Aufbringen einer Gesamt-Montagekraft, die den Einfluss der Ventilfeder kompensieren hilft. Da zu den Ventilkomponenten auch die äußeren Ventilgehäuseteile gehören, lässt sich dergestalt durch einen bevorzugten Angriff der Klammereinrichtung an den dahingehenden Gehäuseteilen eine wirksame Zusammenhaltekraft auf alle Ventilkomponenten des Ventiles respektive des Koaxialventiles erreichen. Es liegt noch im Bereich der Montagevorrichtung, nicht nur dem Zusammenhalt von Ventilkomponenten für den Erhalt einer funktionsfähigen Baugruppe zu dienen, sondern sie kann auch im Bedarfsfall dafür eingesetzt werden, das Ventil an einem Drittbauteil wie einem fluidführenden Gehäuseblock einer Gesamt-Fluidführung festzulegen, so dass die im Stand der Technik hierfür an sich notwendige Konsolenfestlegung entfallen kann. Das ermöglicht in bauraumsparender Weise eine in Reihe hintereinander angeordnete Ventilanordnung mit mehreren Ventilen, ohne dass Zwischenräume zwischen den Ventilen vorgesehen werden müssten, um deren Festlegung an dem jeweiligen Drittbauteil zu ermöglichen.

Bei einer bevorzugten Ausführungsform der Vorrichtung ist vorgesehen, dass die Klammereinrichtung permanent am Ventil verbleibend angeordnet ist. Dergestalt bildet das Ventil zusammen mit der Klammereinrichtung eine ohne Weiteres tauschbare Montagegruppe aus, was ein rasches Austauschen des Ventils, beispielsweise im Versagensfall, ermöglicht.

Bei einer weiteren bevorzugten Ausführungsform der Montagevorrichtung ist vorgesehen, dass die Klammereinrichtung aus einem Gehäuse mit einzelnen Klammerteilen gebildet ist, die das Ventil als Baugruppe mit seinen einzelnen Gehäuseteilen auf seinen gegenüberliegenden Stirnseiten übergreifen. Das dahingehende Gehäuse bildet eine Art Aufnahmekäfig aus, wobei vorzugsweise das jeweilige Klammerteil aus einem Wandsegment der Klammereinrichtung gebildet ist, das einstückig an ein Kopfstück anschließt, das eine Ausnehmung aufweist für den Durchgriff eines einer Fluidführung dienenden Anschlussstücks. Vorzugsweise ist dabei ferner vorgesehen, dass das freie Ende des jeweiligen Klammerteils, das dem Kopfstück gegenüberliegt, federelastisch nachgiebig bewegbar ausgestaltet ist und mit seinem freien in Richtung des Ventils vorstehenden Rand an dessen Ventilgehäuse unter Freilassen eines Bereichs für den Durchgriff eines weiteren der Fluidführung dienenden Anschlussstückes angreift. Dergestalt ist über den Aufnahmekäfig eine stirnseitige Fluidzufuhr und -abfuhr für das Ventil, vorzugsweise in Form des Koaxialventils, erreicht, so dass in besonders bauraumsparender Weise die Fluidführung über die stirnseitigen Gehäuseenden des Ventils erreicht ist. Mittels des Aufnahmekäfigs ist dergestalt die eigentliche Fluidführung von Zusatzfunktionen für das Ventil entkoppelt, die beispielsweise in einer Stromzuführung für einen Betätigungsmagneten des Ventils oder dergleichen mehr zu sehen sind.

Bei einer weiteren bevorzugten Ausführungsform der Montagevorrichtung ist vorgesehen, dass das Kopfstück in stirnseitiger Anlage mit einem Gehäuseteil des Ventilgehäuses und das jeweils freie Ende der jeweiligen Klammerteile der Klammereinrichtung in übergreifender Anlage mit einem weiteren Gehäuseteil des Ventilgehäuses ist. Aufgrund der stirnseitigen Anlage sowie der übergreifenden Anlage durch den Aufnahmekäfig stehen relativ großflächige Areale für das definierte Festlegen der Ventilkomponenten zur Verfügung, was den Zusammenbauvorgang für das Ventil erleichtert und eine bleibende Aneinanderlage der Ventilkomponenten sicherstellt.

Bei einer weiteren besonders bevorzugten Ausführungsform der Montagevorrichtung ist vorgesehen, dass der Abstand zwischen dem Kopfstück und dem jeweils freien Ende eines Klammerteils der Klammereinrichtung dem Abstand der Gehäuseteile des Ventils als Baugruppe in dessen Funktionszustand entspricht und kleiner ist als der Abstand zwischen den Gehäuseteilen, die ohne Klammereinrichtung von der Ventilfeder auseinandergehalten sind. Aufgrund der dahingehenden Ausgestaltung wird aufgrund der angesprochenen Ventilfeder ein etwaiges Spiel zwischen Ventil und der Klammereinrichtung respektive dem Aufnahmekäfig beseitigt und die in Rede stehenden Ventilkomponenten, insbesondere in Form der äußeren Gehäuseteile, liegen unter der Ventil- oder Druckfeder mit Vorspannkraft an dem Klammergehäuse an, so dass dergestalt ein unbeabsichtigtes Lösen der Ventilkomponenten voneinander mit Sicherheit vermieden ist. Für eine dahingehende optimierte Krafteinleitung ist bevorzugt vorgesehen, dass ein Paar von Klammerteilen diametral zur Längsachse des Ventils einander gegenüberliegend an dem jeweils zuordenbaren Gehäuseteil des Ventils angreift.

Bei einer weiteren bevorzugten Ausführungsform der Montagevorrichtung ist vorgesehen, dass zumindest eines der Klammerteile in seinem Wandsegment eine Aussparung für Komponenten des Ventils, wie ein elektrisches Stecker-Anschlussteil, aufweist. Hierdurch ist sichergestellt, ohne die Haltefunktion der Klammerteile oder des Haltekäfigs zu beeinträchtigen, dass Zusatzfunktionen für das Ventil realisierbar sind, wie beispielsweise das Anbringen eines elektrischen Stecker-Anschlussteils für die Stromzuführung des Ventil-Betätigungsmagneten oder eines Sensors zur Positionsüberwachung des Ventilteils.

Bei einer weiteren besonders bevorzugten Ausführungsform der Montagevorrichtung ist vorgesehen, dass die Klammereinrichtung mittels einer Schraubenverbindung, die das Kopfstück und die freien, aufeinander zugewandten Klammerenden der jeweiligen Halteklammer durchgreift, das Ventil an einem fluidführenden Gehäuseblock festlegbar ist. Dergestalt hat die Montagevorrichtung noch die Zusatzfunktion, das Ventil über die Klammereinrichtung an eine Fluidführung anzuschließen, deren Teil aus einem fluidführenden Gehäuseblock gebildet ist, wobei mehrere dieser Gehäuseblöcke aneinandergereiht eine Gesamtfluidführung für mehrere in Reihe hintereinander angeordnete Ventile im Rahmen einer Gesamt-Ventilanordnung ergeben können.

Im Folgenden wird die erfindungsgemäße Lösung anhand eines Ausführungsbeispiels nach der Zeichnung näher erläutert. Dabei zeigen in prinzipieller und nicht maßstäblicher Darstellung die
- Fig. 1: eine perspektivische Ansicht der Montagevorrichtung zum Festlegen eines Koaxialventils im montierten Zustand auf einem fluidführenden Gehäuseblock;
- Fig. 2: einen Längsschnitt der Vorrichtungslösung nach der Fig. 1, jedoch ohne zugehörigen Gehäuseblock;
- Fig. 3: eine perspektivische Ansicht einer Klammereinrichtung, wie sie zum Festlegen des Koaxialventils nach den Fig. 1 und 2 vorgesehen ist; und
- Fig. 4: eine Unteransicht auf das Kopfstück der Klammereinrichtung nach der Fig. 3.

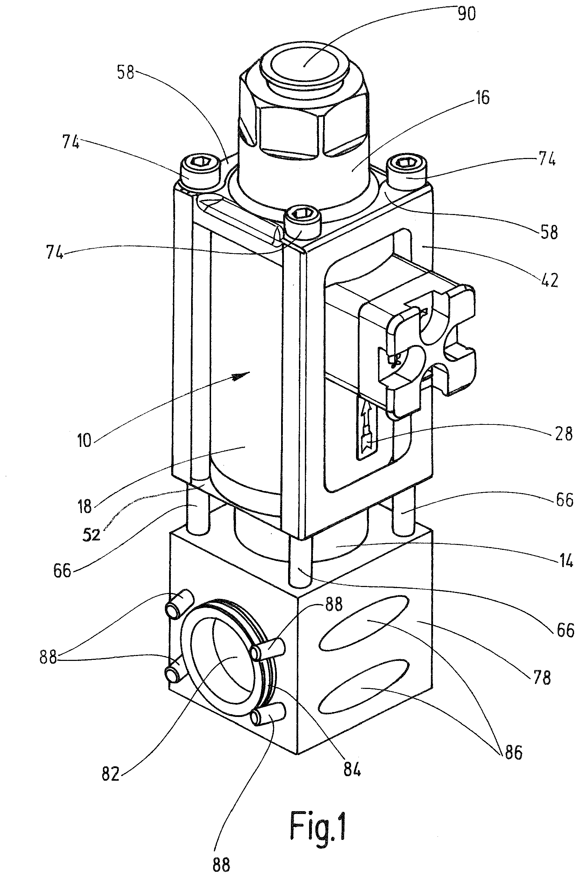

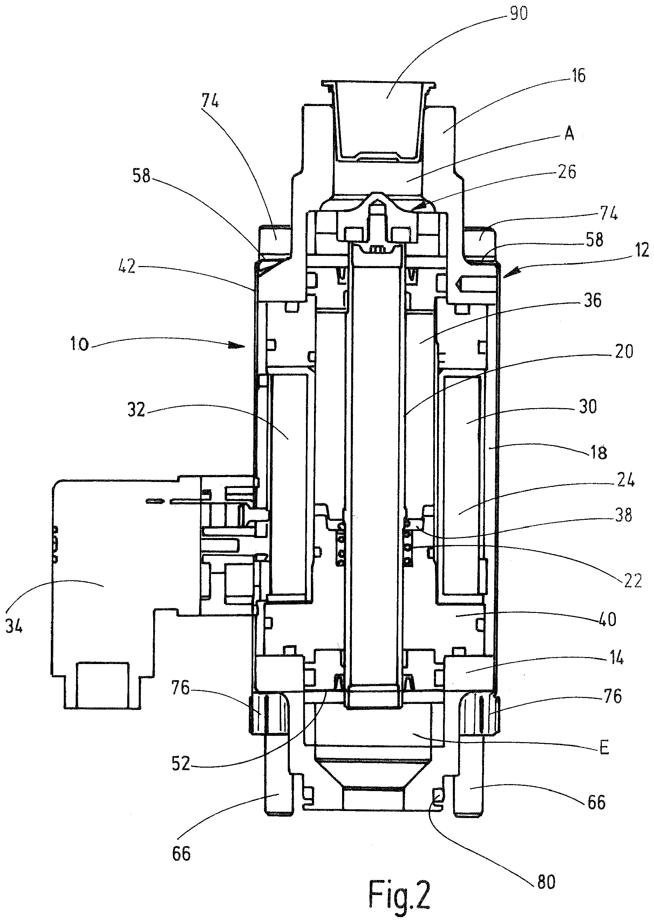

Eine Montagevorrichtung für den Einsatz bei Ventilen 10 ist in den Fig. 1 und 2 als Ganzes dargestellt. Das Ventil 10 ist als Koaxialventil ausgebildet und besteht aus mehreren Ventilkomponenten 12, die zu einer funktionsfähigen Baugruppe zusammen ein mehrteiliges Ventilgehäuse 14, 16, 18 aufweisen, in dem längsverfahrbar ein hohles, zylindrisches Ventilteil 20 geführt ist. Das Ventilteil 20 ist, wie die Fig. 2 zeigt, unter Einwirkung eines Energiespeichers in Form einer als Druckfeder konzipierten Ventilfeder 22 als einem Teil einer Betätigungseinrichtung 22, 24 in einer geschlossenen Position in Anlage mit einem Ventil-Schließteil 26 gezeigt, in der dieses den Fluidweg durch das Koaxialventil hindurch zwischen einem Fluideingang E und einem Fluidausgang A entlang eines vorgebbaren Strömungsweges, der in Fig. 1 mit einem Pfeil 28 angedeutet ist, für ein Fluid, wie Hydraulikmedium (Öl) sperrt. In zumindest einer in den Figuren nicht näher dargestellten geöffneten Position, in der das Ventilteil 20 von einer Magnet-Betätigungseinrichtung 24 als einem weiteren Teil der Betätigungseinrichtung angesteuert in seiner axialen Verfahrrichtung entgegen der Wirkung der Ventilfeder 22 außer Eingriff mit dem Ventil-Schließteil 26 gelangt und von diesem abhebt, wird der Fluidweg in axialer Strömungsrichtung durch das Koaxialventil hindurch zwischen dem Fluideingang E und dem Fluidausgang A entlang des vorgebbaren Strömungsweges in Pfeilrichtung 28 für das Fluid freigegeben. In dieser geöffneten Position des Ventilteils 20 weisen die einander zugewandten Stirnseiten von Ventilteil 20 und Ventilschließteil 26 einen axialen Abstand zueinander auf. Während die Ventilgehäuseteile 14 und 16 den Fluideingang E bzw. den Fluidausgang A umfassen, umfasst das mittlere Ventilgehäuseteil 18 im Wesentlichen die vorstehend genannten Teile der Betätigungseinrichtung 22, 24 und sonstige Ventilkomponenten 12.

Die in Fig. 2 gezeigte Magnet-Betätigungseinrichtung 24 weist einen bestrombaren Betätigungsmagneten 30 auf, der in üblicher und daher nicht mehr näher beschriebenen Art und Weise eine Spulenwicklung 32 aufweist, die über ein Steckerteil 34 von außen her bestrombar ist. Des Weiteren ist ein längsverfahrbarer Magnetanker 36 vorhanden, der unter unmittelbarer Anlage und fest mit dem verfahrbaren Ventilteil 20 verbunden, direkt auf dieses einwirkt. Wird die Spulenwicklung 32 über das Steckerteil 34 bestromt, verfährt in Blickrichtung auf die Fig. 2 gesehen der Magnetanker 36 aus seinem in der Fig. 2 gezeigten unbestromten Zustand der Spulenwicklung 32 nach unten und das Ventilteil 20 verfährt entgegen der Wirkung der Ventilfeder 22 gleichfalls nach unten. In der vollständig geöffneten Position des Ventilteils 20 ist der Magnetanker 36 des Betätigungsmagneten 30 unter Freilassen eines Trennspaltes 38, der als gestuft ausgebildete magnetische Trennung für den Betätigungsmagneten 30 dient, auf Block gegen einen Polkern 40 der Betätigungseinrichtung 22, 24 gehalten. Der dahingehende Aufbau eines Koaxialventiles ist üblich und detaillierter in der DE 10 2017 008 943 A1 beschrieben.

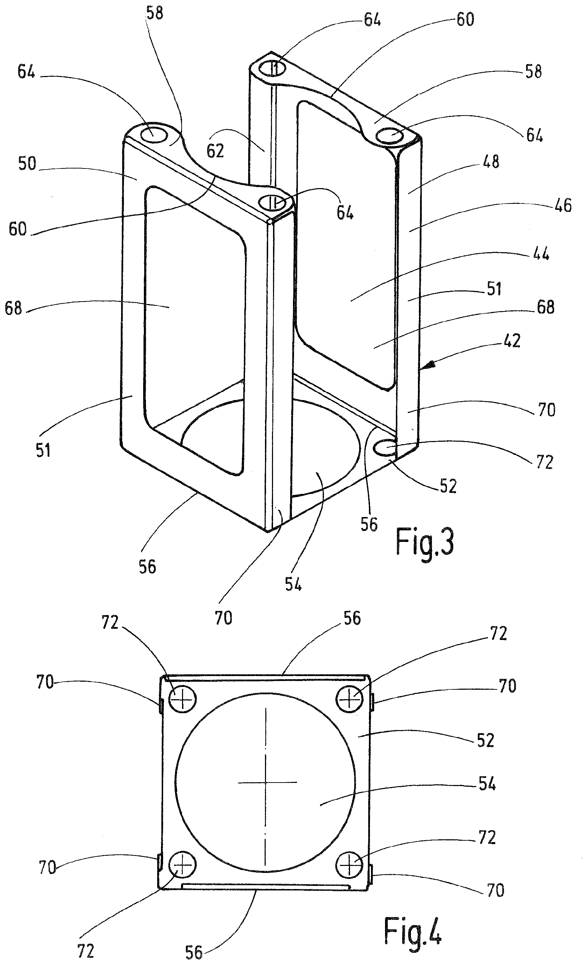

Alle vorstehend genannten Ventilkomponenten 12 haben das Bestreben sich zumindest teilweise wieder voneinander zu separieren, respektive zu vereinzeln, wobei das dahingehende Bestreben unter der Vorspannung der Ventilfeder 22 in verstärktem Maße unterstützt ist. Um diesem Vereinzelungsvorgang entgegenzuwirken, ist eine Klammereinrichtung 42 vorgesehen, die auf das Ventil 10 von außen her einwirkt und die einzelnen genannten Ventilkomponenten 12 in Form der in Fig. 2 gezeigten Baugruppe zusammenhält. Hierfür weist die Klammereinrichtung 42 einen quaderförmigen Aufnahmeraum 44 (Fig. 3) auf, in den die Ventilkomponenten 12 aufnehmbar, insbesondere einzeln oder als Gruppe insgesamt aufnehmbar respektive einstapelbar sind und insoweit über die Klammereinrichtung 42 aneinandergehalten werden, wobei die Klammereinrichtung 42 gemäß der Darstellung nach den Fig. 1 und 2 permanent am Ventil 10 verbleibend angeordnet ist.

Die Klammereinrichtung 42 weist dabei in der Art eines Aufnahmekäfigs ein Gehäuse 46 auf, das einzelne Klammerteile 48, 50 aufweist. Das jeweilige Klammerteil 48, 50 ist aus einem Wandsegment 51 der Klammereinrichtung gebildet, das jeweils einstückig an ein bodenseitiges Kopfstück 52 anschließt, das eine kreisrunde Mittenausnehmung 54 aufweist für den Durchgriff des unteren Ventilgehäuseteiles 14, das den Fluideingang E umfasst. Das freie Ende des jeweiligen Klammerteiles 48, 50, das dem Kopfstück 52 gegenüberliegt, ist federelastisch nachgiebig bewegbar ausgestaltet und bildet hierfür an der Stelle des Überganges zu dem Kopfstück 52 eine linienförmig verlaufende Gelenkstelle 56 aus. An der Stelle des freien Endes ist das jeweilige Klammerteil 48, 50 mit einem in Richtung des Ventils 10 vorstehenden Rand 58 versehen, die auf ihren inneren, einander benachbart zugewandten Stirnseiten jeweils eine konkave Vertiefung 60 aufweisen, die einen Mittenbereich 62 freilassen, der für den Durchgriff des weiteren der Fluidführung dienenden Anschlussstückes vorgesehen ist, gebildet aus dem Ventilgehäuseteil 16 mit der Fluidabfuhr A.

Die beiden Ränder 58 sind ausgehend von den wandsegmentartigen Klammerteilen 48, 50 rechtwinklig aufeinander umgelegt und jeder Rand 58 weist in seinem Eckbereich ein kreisrundes Durchgriffsloch 64 auf für den Durchgriff von Festlegeschrauben 66 (siehe Fig. 1) einer Gesamt-Schraubenverbindung. Das jeweilige wandsegmentartige Klammerteil 48, 50 weist mittig eine rechteckförmige Ausnehmung 68 auf, wobei eine der Ausnehmungen 68 dem Durchgriff des Steckerteiles 34 dient. Zur Erhöhung der Stabilität weisen die Wandsegmente 51 der Klammerteile 48, 50 einen nach innen umgelegten weiteren Längsrand 70 auf, wobei die Ränder 70 paarweise einander zugeordnet immer ein Klammerteil 48, 50 randseitig einander zugewandt nach außen hin begrenzen. Die dahingehend weiteren Ränder schließen insoweit dem Aufnahmeraum 44 zugewandt, bündig mit dem jeweils zuordenbaren Rand 58 eines Klammerteiles 48, 50 ab. Das bodenseitige Kopfstück 52 bildet mit den beiden Klammerteilen 48, 50 eine Art U-bügelförmigen Aufnahmekäfig aus.

Die fensterartigen Ausnehmungen 68 sind rechteckförmig in den Klammerteilen 48, 50 ausgebildet und von den Rahmenteilen der Wandsegmente 51 gleichmäßig umfasst. Das Kopfstück 52 ist als ebene Platte im Wesentlichen rechteckförmig ausgebildet und die kreisrunde Mittenausnehmung 54 ist mittig im Kopfstück 52 platziert, das von einem Rand des Kopfstücks 52 umgeben in seinen vier Eckbereichen vier weitere kreisrunde Durchgriffslöcher 72 aufweist, die für den Durchgriff der Festlegeschrauben 66 mit den zuordenbaren Durchgriffslöchern 64 fluchtend miteinander angeordnet sind.

Der in der Fig. 3 als Ganzes dargestellte Aufnahmekäfig in Form der Klammereinrichtung 42 ist aus einem dünnwandigen Blechwerkstoff gebildet, der sich für die Bildung der beiden Klammerteile 48, 50 und deren Ränder 58, 70 gut biegebearbeiten lässt. Die Klammereinrichtung 42 ist eigenstabil, um die Ventilkomponenten 12 sicher aneinander zu halten und dennoch hinreichend flexibel, um die umgebogenen Enden oder Ränder 58 der beiden Klammerteile 48, 50 voneinander weg derart abspreizen zu können, dass das Ventil 10 mit seinen Ventilkomponenten 12 zwanglos einsetzbar ist.

Im Zusammenbauzustand, bei dem das Koaxialventil 10 in der Klammereinrichtung 42 gemäß der Darstellung nach den Fig. 1 und 2 aufgenommen ist, erstreckt sich das mittlere zylindrische Ventilgehäuseteil 18 im Aufnahmeraum 44 der Klammereinrichtung 42, der von den vier Festlegeschrauben 66 aufgespannt ist.

Das in Blickrichtung auf die Fig. 1 gesehen obere Ventilgehäuseteil 16 ist an dem Übergang zum mittleren Ventilgehäuseteil 18 flanschartig verbreitert, ebenso wie das untere Gehäuseteil 14.

Aufgrund der flanschartigen Verbreiterung entstehen im Wesentlichen horizontal verlaufende vorstehende Anlageflächen, entlang denen das Kopfstück 52 in stirnseitiger Anlage mit dem Gehäuseteil 14 des Ventilgehäuses ist, und die jeweils freien Enden der jeweiligen Klammerteile 48, 50 sind mit ihren einander zugewandten Rändern 58 in übergreifender Anlage mit dem weiteren Gehäuseteil 16 des Ventilgehäuses. Die Festlegeschrauben 66 liegen mit ihrem Schraubenkopf 74 auf der Oberseite des jeweiligen Klammerteilrandes 58 auf und die freien Enden der Festlegeschrauben 66 stehen mit einem axialen Überstand über die Unterseite des Kopfstücks 52 vor, die in einer gemeinsamen horizontalen Ebene ausmünden. Über in der Fig. 1 nicht näher dargestellte, aber in der Fig. 2 gezeigte Verliersicherungen 76 sind die einzelnen Festlegeschrauben 66 an der Unterseite des plattenartigen Kopfstücks 52 gesichert.

Vorzugsweise ist bei der dahingehenden Aufnahme vorgesehen, dass der Abstand zwischen dem Kopfstück 52 und dem jeweils freien Ende eines Klammerteils 48, 50 der Klammereinrichtung 42 im Bereich der umgelenkten Ränder 58 dem axialen Abstand der Gehäuseteile 14, 16, 18 des Ventils 10 als Baugruppe in dessen Funktionszustand entlang seiner Längsachse entspricht und vorzugsweise kleiner ist als der Abstand zwischen den Gehäuseteilen 14, 16, 18, die ohne Klammereinrichtung 42 von der Ventilfeder 22 auseinandergehalten sind. Dergestalt werden die Ventilkomponenten 12 unter Vorspannung im Aufnahmekäfig der Klammereinrichtung 42 definiert auf Position gehalten. Wie die Darstellung nach der Fig. 1 weiter zeigt, greifen die freien Endbereiche der Festlegeschrauben 66 in zuordenbare Gewindebohrungen in einen fluidführenden Gehäuseblock 78 als dem einen Drittbauteil ein, wobei das untere Ende des Gehäuseteils 14 mit seiner umlaufenden Ringdichtung 80 in bündigen Eingriff mit der zugeordneten Gehäuseöffnung auf der Oberseite des Gehäuseblocks 78 kommt.

Der Gehäuseblock 78 weist auf seiner dem Betrachter der Fig. 1 zugewandten Vorderseite eine kanalartige Fluidöffnung 82 auf, die umfangsseitig eine weitere Ringdichtung 84 trägt. Über gegenüberliegende seitliche Ausnehmungen 86 im Gehäuseblock 78 lassen sich vier Verbindungsschrauben 88 in Eingriff bringen mit einem nachfolgenden, vorzugsweise gleichgestalteten Gehäuseblock (nicht dargestellt), so dass insoweit mehrere Gehäuseblöcke 78 in Hintereinanderreihung eine Gesamt-Fluidführung für einzelne Ventile 10 ergeben. Dabei kann jeder Gehäuseblock 78 mit der vorstehend beschriebenen Montagevorrichtung versehen sein, wobei für die Lösung bezeichnend ist, dass der mit der Montagevorrichtung umbaute Raum in fiktiver, vertikaler Verlängerung gesehen, die Seitenwände des jeweils zuordenbaren Gehäuseblocks 78 nicht übergreift, die in Blickrichtung auf die Fig. 1 gesehen eine vertikale Ausrichtung einnehmen. Dergestalt lässt sich die Montagevorrichtung, zusammen mit dem Gehäuseblock 78 und dem Ventil 10, auch als tauschbare Einheit im Rahmen der Gesamt-Fluidführung einsetzen und in der Reihe benachbart angeordnete Montagevorrichtungen blockieren einander nicht.

Anstelle einer solchen beschriebenen Fluidführung besteht aber auch die Möglichkeit, wie in Fig. 1 dargestellt, nur einen Gehäuseblock 78 für die Montagevorrichtung mit dem Ventil 10 vorzusehen. Während der Fluidausgang A eines jeden Ventils 10 an die fluidabführende Fluidöffnung 82 des Gehäuseblocks 78 angeschlossen ist, ist der obere Ventil-Fluideingang E erst noch an eine zugehörige, nicht näher dargestellte Fluidleitung anzuschließen. Bis dahin bleibt der Fluideingang E, um Verschmutzungen im Inneren des Ventils 10 zu vermeiden, von einem stopfenartigen Verschlussteil 90 verschlossen. Insbesondere im Bereich der Kühlschmiermittelzufuhr bei Werkzeugmaschinen wird sich die vorstehend beschriebene Koaxialventillösung nebst Montagevorrichtung und zuordenbarem Gehäuseblock bewähren.

## Patentansprüche

1. Klammereinrichtung, wobei unter Bildung einer Art Aufnahmekäfig ein Aufnahmeraum (44) von einem Kopfstück (52) und zwei Klammerteilen (48, 50), die als federelastische Zungen an dem Kopfstück (52) einstückig angelenkt sind, zumindest mitbegrenzt ist, wobei die Klammerteile (48, 50) und das Kopfstück (52) Durchgriffstellen (64; 72) zum Anbringen zumindest von Teilen einer Schraubenverbindung (66) aufweisen, und
wobei das Kopfstück (52) als ebene Platte im Wesentlichen rechteckförmig ausgebildet ist und eine kreisrunde Mittenausnehmung (54) mittig im Kopfstück (52) platziert ist, die von einem Rand des Kopfstücks (52) umgeben ist,
**dadurch gekennzeichnet,**
**dass** der Rand in seinen vier Eckbereichen vier kreisrunde Durchgriffslöcher (72) als Durchgriffsstellen des Kopfstücks (52) aufweist; und
**dass** die Durchgriffslöcher (72) des Kopfstücks (52) für den Durchgriff von Festlegeschrauben der Schraubenverbindung (66) mit zuordenbaren Durchgriffslöchern (64) als Durchgriffsstellen der Klammerteile (48, 50) fluchtend miteinander angeordnet sind.

2. Montagevorrichtung für Ventile (10), insbesondere Koaxialventile, die aus mehreren Ventilkomponenten (12) zu einer Baugruppe zusammengesetzt sind, die das Bestreben haben, sich zumindest teilweise wieder voneinander zu separieren, **dadurch gekennzeichnet, dass** im Gebrauch mittels einer von außen auf das jeweilige Ventil (10) einwirkenden Klammereinrichtung (42) nach Anspruch 1 die Ventilkomponenten (12) in Form der Baugruppe zusammengehalten sind, die hierfür in einen Aufnahmeraum (44) der Klammereinrichtung (42) aufgenommen sind.

3. Montagevorrichtung nach Anspruch 2, **dadurch gekennzeichnet, dass** im Gebrauch unter der Vorspannung einer Ventilfeder (22) die Ventilkomponenten (12) das Bestreben haben sich zu vereinzeln.

4. Montagevorrichtung nach Anspruch 2 oder 3, **dadurch gekennzeichnet, dass** im Gebrauch die Klammereinrichtung (42) permanent am Ventil (10) verbleibend angeordnet ist.

5. Montagevorrichtung nach einem der Ansprüche 2 bis 4, **dadurch gekennzeichnet, dass** im Gebrauch die Klammereinrichtung (42) aus einem Gehäuse mit einzelnen Klammerteilen (48, 50) gebildet ist, die das Ventil (10) als Baugruppe mit seinen einzelnen Gehäuseteilen (14, 16, 18) auf seinen gegenüberliegenden Stirnseiten übergreifen.

6. Montagevorrichtung nach einem der Ansprüche 2 bis 5, **dadurch gekennzeichnet, dass** das jeweilige Klammerteil (48, 50) aus einem Wandsegment (51) der Klammereinrichtung (42) gebildet ist, das sich einstückig an das Kopfstück (52) anschließt, das die Mittenausnehmung (54) aufweist für den Durchgriff eines einer Fluidführung dienenden Anschlussstücks (14).

7. Montagevorrichtung nach einem der Ansprüche 2 bis 6, **dadurch gekennzeichnet, dass** im Gebrauch ein freies Ende des jeweiligen Klammerteils (48, 50), das dem Kopfstück (52) gegenüberliegt, federelastisch nachgiebig bewegbar ausgestaltet ist und mit seinem freien, in Richtung des Ventils (10) vorstehenden Rand (58) an dessen Ventilgehäuse unter Freilassen eines Bereichs (62) für den Durchgriff eines weiteren der Fluidführung dienenden Anschlussstücks (16) angreift.

8. Montagevorrichtung nach einem der Ansprüche 2 bis 7, **dadurch gekennzeichnet, dass** im Gebrauch das Kopfstück (52) in stirnseitiger Anlage mit einem Gehäuseteil (14) des Ventilgehäuses und das jeweils freie Ende der jeweiligen Klammerteile (48, 50) der Klammereinrichtung (42) in übergreifender Anlage mit einem weiteren Gehäuseteil (16) des Ventilgehäuses ist.

9. Montagevorrichtung nach einem der Ansprüche 2 bis 8, **dadurch gekennzeichnet, dass** im Gebrauch der Abstand zwischen dem Kopfstück (52) und dem jeweils freien Ende eines Klammerteils (48, 50) der Klammereinrichtung (42) dem Abstand der Gehäuseteile (14, 16, 18) des Ventils (10) als Baugruppe in dessen Funktionszustand entspricht und kleiner ist als der Abstand zwischen den Gehäuseteilen (14, 16, 18), die ohne Klammereinrichtung (42) von der Ventilfeder (22) auseinandergehalten sind.

10. Montagevorrichtung nach einem der Ansprüche 2 bis 9, **dadurch gekennzeichnet, dass** im Gebrauch zumindest ein Paar von Klammerteilen (48, 50) diametral zur Längsachse des Ventils (10) aneinander gegenüberliegend an dem weiteren Gehäuseteil (16) angreift.

11. Montagevorrichtung nach einem der Ansprüche 5 oder 6 bis 10 wenn direkt oder indirekt von Anspruch 5 abhängig, **dadurch gekennzeichnet, dass** zumindest eines der Klammerteile (48, 50) in seinem Wandsegment (51) eine Aussparung (68) für Komponenten des Ventils (12), wie ein elektrisches Stecker-Anschlussteil (34), aufweist.

12. Montagevorrichtung nach einem der Ansprüche 2 bis 11, **dadurch gekennzeichnet, dass** im Gebrauch die Klammereinrichtung (42) mittels einer Schraubenverbindung (66), die das Kopfstück (52) und die freien, aufeinander zugewandten Klammerenden des jeweiligen Klammerteils (48, 50) durchgreift, an einem fluidführenden Gehäuseblock (78) als einem Drittbauteil festlegbar ist.

## Claims

1. Bracket device, wherein a receiving space (44) is at least partly bounded by a head piece (52) and two bracket parts (48, 50) which are integrally hinged to the head piece (52) as resilient tongues, forming a type of receiving cage, wherein the bracket parts (48, 50) and the head piece (52) have access points (64; 72) for attaching at least parts of a screw connection (66), and
wherein the head piece (52) is configured as a flat plate of substantially rectangular shape and a circular central recess (54) is positioned centrally in the head piece (52), said recess being surrounded by an edge of the head piece (52), **characterised in that**
the edge has, in its four corner regions, four circular access holes (72) as access points of the head piece (52); and
**in that**, for the access of fixing screws of the screw connection (66), the access holes (72) of the head piece (52) and associated access holes (64), as access points of the bracket parts (48, 50), are arranged in alignment with each other.

2. Mounting device for valves (10), in particular coaxial valves, which are assembled from a plurality of valve components (12) to form an assembly, which components have a tendency to separate from each other again at least in part, **characterised in that**, in use, the valve components (12) are held together in the form of the assembly by means of a bracket device (42) according to claim 1 which acts on the respective valve (10) from the outside, said valve components being received for this purpose in a receiving space (44) of the bracket device (42).

3. Mounting device according to claim 2, **characterised in that**, in use, the valve components (12) have a tendency to separate under the pretension of a valve spring (22).

4. Mounting device according to claim 2 or 3, **characterised in that**, in use, the bracket device (42) is arranged to remain permanently on the valve (10).

5. Mounting device according to one of claims 2 to 4, **characterised in that**, in use, the bracket device (42) is formed of a housing with individual bracket parts (48, 50) which overlap the valve (10) as an assembly with its individual housing parts (14, 16, 18) on its opposing end faces.

6. Mounting device according to one of claims 2 to 5, **characterised in that** the respective bracket part (48, 50) is formed from a wall segment (51) of the bracket device (42), said wall segment integrally adjoining the head piece (52) which has the central recess (54) for the access of a connection piece (14) used for guiding fluid.

7. Mounting device according to one of claims 2 to 6, **characterised in that**, in use, a free end of the respective bracket part (48, 50), which is opposite the head piece (52), is configured to be movable in a resiliently yielding manner and with its free edge (58), which protrudes towards the valve (10), engages on the valve housing of the latter, leaving free a region (62) for the passage of a further connection piece (16) used for guiding fluid.

8. Mounting device according to one of claims 2 to 7, **characterised in that**, in use, the head piece (52) is in end face contact with a housing part (14) of the valve housing and the free end in each case of the respective bracket parts (48, 50) of the bracket device (42) is in overlapping contact with a further housing part (16) of the valve housing.

9. Mounting device according to one of claims 2 to 8, **characterised in that**, in use, the distance between the head piece (52) and the free end in each case of a bracket part (48, 50) of the bracket device (42) corresponds to the distance between the housing parts (14, 16, 18) of the valve (10) as an assembly in its functional state and is smaller than the distance between the housing parts (14, 16, 18) which are held apart by the valve spring (22) without the bracket device (42).

10. Mounting device according to one of claims 2 to 9, **characterised in that**, in use, at least one pair of bracket parts (48, 50) engages the further housing part (16) in diametrically opposed relationship to the longitudinal axis of the valve (10).

11. Mounting device according to one of claims 5 or 6 to 10, if directly or indirectly dependent on claim 5, **characterised in that** at least one of the bracket parts (48, 50) has in its wall segment (51) a cut-out (68) for components of the valve (12), such as an electrical plug connection part (34).

12. Mounting device according to one of claims 2 to 11, **characterised in that**, in use, the bracket device (42) can be fixed to a fluid-conducting housing block (78) as a third component by means of a screw connection (66) which passes through the head piece (52) and the free bracket ends directed towards each other of the respective bracket part (48, 50).

## Revendications

1. Dispositif de serrage, dans lequel, en formant une sorte de cage de réception, sont délimités au moins ensemble un espace (44) de réception d'une pièce (52) de tête et deux parties (48, 50) de serrage qui sont articulées d'une seule pièce à la pièce (52) de tête, sous la forme de languettes ayant une élasticité de ressort, dans lequel les parties (48, 50) de serrage et la pièce (52) de tête ont des points (64 ; 72) de pénétration pour le montage d'au moins des parties d'un vissage (66), et
dans lequel la pièce (52) de tête est constituée sous la forme d'une plaque plane sensiblement de forme rectangulaire et un évidement (54) médian circulaire est placé au milieu dans la pièce (52) de tête en étant entourée d'un bord de la pièce (52) de tête,
**caractérisé**
**en ce que** le bord a, dans ses quatre parties de sommet, quatre trous (72) circulaires de pénétration comme points de pénétration de la tête (52) de tête, et
**en ce que** les trous (72) de pénétration de la pièce (52) de tête sont, pour la pénétration de vis de fixation du vissage (66), disposés en étant alignés les uns avec les autres avec des trous (64) de pénétration pouvant être associés comme points de pénétration des parties (48, 50) de serrage.

2. Système de montage de soupapes (10), notamment de soupapes coaxiales, qui sont composées à partir de plusieurs composants (12) de soupape en un module, qui ont tendance à se reséparer les uns des autres au moins en partie, **caractérisé en ce que**, en utilisation, au moyen d'un dispositif (42) de serrage suivant la revendication 1, agissant de l'extérieur sur la soupape (10) respective, les composants (12) de soupape sont maintenus ensemble sous la forme du module, en étant reçus à cet effet dans un espace (44) de réception du dispositif (42) de serrage.

3. Système de montage suivant la revendication 2, **caractérisé en ce qu'**en utilisation, sous la précontrainte d'un ressort (22) de soupape, les composants (12) de soupape ont tendance à s'individualiser.

4. Système de montage suivant la revendication 2 ou 3, **caractérisé en ce qu'**en utilisation, le dispositif (42) de serrage est monté à demeure en permanence sur la soupape (10) .

5. Système de montage suivant l'une des revendications 2 à 4, **caractérisé en ce qu'**en utilisation, le dispositif (42) de serrage est formé d'un boîtier ayant diverses parties (48, 50) de serrage, qui chevauchent, sur ses côtés frontaux opposés, la soupape (10) comme module, par ses diverses parties (14, 16, 18) de boîtier.

6. Système de montage suivant l'une des revendications 2 à 5, **caractérisé en ce que** la partie (48, 50) respective de serrage est formée d'un segment (51) de paroi du dispositif (42) de serrage, qui se raccorde d'une seule pièce à la pièce (52) de tête, laquelle a l'évidement (54) médian pour la pénétration d'une pièce (14) de raccordement servant à conduire du fluide.

7. Système de montage suivant l'une des revendications 2 à 6, **caractérisé en ce qu'**en utilisation, une extrémité libre de la partie (48, 50) respective de serrage, qui est en regard de la pièce (52) de tête, est conformée, de manière mobile en cédant élastiquement à la manière d'un ressort, et attaque, par son bord (58) libre en saillie en direction de la soupape (10) sur son boîtier de soupape en laissant libre une partie (62) pour la pénétration d'une autre pièce (16) de raccord servant à conduire du fluide.

8. Système de montage suivant l'une des revendications 2 à 7, **caractérisé en ce qu'**en utilisation, la pièce (52) de tête est en contact du côté frontal avec une partie (14) de boîtier du boîtier de la soupape, et **en ce que** l'extrémité libre respective des parties (48, 50) respectives de serrage du dispositif (42) de serrage est en contact à chevauchement avec une autre partie (16) de boîtier du boîtier de la soupape.

9. Système de montage suivant l'une des revendications 2 à 8, **caractérisé en ce qu'**en utilisation, la distance entre la pièce (52) de tête et l'extrémité libre respective d'une partie (48, 50) de serrage du dispositif (42) de serrage correspond à la distance entre les parties (14, 16, 18) de boîtier de la soupape (10) comme module dans son état fonctionnel, et est plus petite que la distance entre les parties (14, 16, 18) du boîtier, qui seraient maintenues distinctes les unes des autres par le ressort (22) de la soupape sans le dispositif (42) de serrage.

10. Système de montage suivant l'une des revendications 2 à 9, **caractérisé en ce qu'**en utilisation, au moins une paire de parties (48, 50) de serrage attaque l'autre partie (16) de boîtier, en étant opposées l'une à l'autre diamétralement par rapport à l'axe longitudinal de la soupape (10).

11. Système de montage suivant l'une des revendications 5 ou 6 ou 6 à 10, lorsqu'elle dépend directement ou indirectement de la revendication 5, **caractérisé en ce qu'**au moins l'une des parties (48, 50) de serrage a, dans son segment (51) de paroi, un évidement (68) pour des composants de la soupape (12), comme une partie (34) de connecteur électrique.

12. Système de montage suivant l'une des revendications 2 à 11, **caractérisé en ce qu'**en utilisation, le dispositif (42) de serrage peut être fixé à un bloc (78) de boîtier conduisant du fluide comme pièce tierce, au moyen d'un vissage (66), qui traverse la pièce (52) de tête et les extrémités libres de serrage tournées les unes vers les autres de la partie (48, 50) respective de serrage.
